# EUROPÄISCHE PATENTANMELDUNG

(11) **EP 0 902 278 A2**
(43) Veröffentlichungstag der Anmeldung: **17.03.1999**
(21) Anmeldenummer: 98112940.6
(22) Anmeldetag: 13.07.1998
(51) Int. Cl.: G01N 27/416

(54) **Katalytisches Schichtsystem**

(30) Priorität: 29.07.1997 DE 19732601
(71) Anmelder: Heraeus Electro-Nite International N.V., 3530 Houthalen (BE)
(72) Erfinder: Schönauer, Ulrich, Dr., 76344 Eggenstein (DE); Tafferner, Michael, 76316 Malsch (DE)
(74) Vertreter: Kühn, Hans-Christian

(57) **Zusammenfassung**

Die Erfindung betrifft ein katalytisches Schichtsystem auf einem resistiven Gassensor, insbesondere auf einer resistiven Gassensorschicht auf Titanat-Basis, mit mindestens einer ersten Schicht und einer über der ersten liegenden zweiten Schicht, wobei erfindungsgemäß die erste Schicht eine katalytisch wirksame Substanz aufweist, deren Volumenanteil in der Schicht im Bereich von 20 bis 80 % liegt. Weiterhin enthält die erste Schicht ein Titanat, das mit mindestens einem Titanat der darunterliegenden Gassensorschicht übereinstimmt. Dieses Merkmal gewährleistet eine gute Haftung zwischen den Schichten. In der zweiten Schicht ist weiterhin anstelle der katalytisch wirksamen Substanz ein Oxidgemisch vorgesehen, das zur besseren mechanischen Festigkeit des Schichtsystems beiträgt. Zur Herstellung des katalytischen Schichtsystems werden die einzelnen Schichten im Siebdruckverfahren auf den Sensor aufgebracht, was eine rationelle Fertigungsweise und genaue Dosierung und Verteilung der einzelnen Schichtkomponeten ermöglicht.

## Beschreibung

Die Erfindung betrifft ein katalytisches Schichtsystem auf einem resistiven Gassensor, insbesondere auf einer resistiven, auf einem Titanat basierenden Gassensorschicht, mit mindestens einer ersten Schicht und einer über der ersten liegenden zweiten Schicht, wobei mindestens eine Schicht eine katalytisch wirksame Substanz aufweist.

Aus EP 360 159 B1 ist ein Gassensor bekannt, der in Dickfilmtechnik auf einem Substrat aufgebaut ist. Dabei wird die gassensitive Schicht aus SnO₂, ZnO, Fe₂O₃, TiO₂ oder CoO mit einer vorzugsweise wässrigen Lösung einer Platinverbindung, beispielsweise Chlorplatinsäure, getränkt. Anschließend erfolgt eine Temperaturbehandlung im Bereich von - 5 °C bis 180°C bei reduzierender Gasatmosphäre und bei definierter relativer Feuchte. Um die gewünschte Abscheidung des Edelmetalles in der gassensitiven Schicht zu optimieren, ist eine weitere Temperaturbehandlung bei mehr als 200 °C erforderlich. Der gesamte Imprägniervorgang ist also sehr aufwendig und von vielen Einzelschritten gekennzeichnet, die allein aufgrund ihrer Vielzahl im fertigungstechnische Sinne fehleranfällig sind. Weiterhin ist festzustellen, daß die gassensitive Schicht selbst durch die Imprägnierprozedur nur in ihrer katalytischen Aktivität im Zusammenwirken mit den Elektroden verbessert wird, ein Schutz gegenüber mechanischen Einwirkungen oder Verbindungen, die als Katalysatorgifte wirken, sind durch diesen Aufbau jedoch nicht gegeben.

Eine dem vorgenannten Stand der Technik ähnliche Imprägniertechnik offenbart DE 42 40 267 A1, hier jedoch nicht auf einer gassensitiven Schicht, sondern im Zusammenhang mit dem katalytischen Aktivieren einer Cermet-Elektrode auf einem Sauerstoffionen leitenden Festelektrolyten eines Gassensors. Hierbei werden verschiedene Platinsalzlösungen angegeben, die auf die poröse Cermet-Elektrode aufgebracht werden. Um ein besseres Eindringen in die Poren der Elektrode zu gewährleisten, wird während der Tränkung mit der Platinlösung das Sensorelement zusätzlich mit einem Druck von 100 mbar bis 1 bar beaufschlagt. Anschließend erfolgt wiederum eine aufwendige Trocknungs- und Einbrennprozedur, teilweise an Luft, teilweise im Wasserstoffstrom. Der in DE 42 40 267 offenbarte Sensorkörper ist fingerförmig (einseitig geschlossenes Rohr), wobei die Cermet-Elektroden in der Regel am geschlossenen Ende des fingerförmigen Körpers angebracht sind. Die Tränkung der Cermet-Elektrode erfolgt daher vorzugsweise durch Eintauchen der auf den sphärischen Oberflächen des Sensorkörpers angeordneten Elektroden in die dünnflüssige Platinlösung. Da es hierbei leicht zu Tropfenbildungen kommen kann, ist eine reproduzierbare Auftragsmenge und damit eine gleichbleibende Konzentration der in die Elektrodenschicht eindringenden katalytisch wirksamen Bestandteile mit dieser Auftragstechnik schwerlich zu gewährleisten. Als Schutzschicht über dieser katalytisch aktivierten Cermet-Elektrode wird anschließend in einem oder mehreren separaten Arbeitsgängen eine poröse, inerte Schicht aufgetragen (beispielsweise durch Plasmaspritzen eines Magnesiumspinells).

Aus DE 195 00 235 A1 sind Abdeckschichten auf elektrischen Leitern und/oder Halbleitern bekannt, die aus Oxidgemischen aus SiO₂, Al₂O₃ und BaO bestehen. Je nach BaO-Anteil und Einbrenntemperatur werden mehr oder weniger poröse Schichten erzeugt. Eine Abdeckschicht nach DE 195 00 235 für die Anwendung auf einer gassensitiven Schicht, beispielsweise aus Strontiumtitanat, umfasst nur eine Schutzfunktion, da die katalytisch wirksame Komponente fehlt. Sie hat überdies den Nachteil, daß ein mechanisch spannungsfreier Verbund mit der darunterliegenden Gassensorschicht nicht erzielt werden kann, da das keramische Material der gassensitiven Schicht in dieser Oxidmischung nicht enthalten ist. Der aus DE 195 00 235 bekannten SiO₂-Al₂O₃-BaO-Abdeckschicht fehlt somit das Merkmal der katalytischen Wirkung und eine Komponente, die für gute Haftung der Schichtfolge auf einer sensitiven Schicht sorgt.

DE 38 13 930 C2 beschreibt eine guthaftende Elektrodenstruktur auf einem Sauerstoffionen leitenden Festelektrolyten aus ZrO₂, die von einer Schutzschicht bestehend aus einem keramischen Material bzw. von einer keramischen "Abstandsschicht" bedeckt ist. In einer speziellen Ausführung befindet sich über dieser ersten Schicht eine Platingruppenmetall enthaltende Katalysatorschicht, die wiederum von einer porösen Schutzschicht aus aufgesprühtem Spinell überschichtet wird (Beispiel 3). Der gesamte Schichtaufbau mit einer zweischichtigen Cermet-Elektrode, einer keramischen Abstandsschicht, einer Katalysatorschicht und einer keramischen Abdeckschicht ist äußerst komplex und durch die Anwendung verschiedener Auftragstechniken (Drucken, Plasmasprühen) in ihrer Herstellung sehr aufwendig.

Es ist daher Aufgabe der Erfindung, ein katalytisch wirksames Schichtsystem für einen resistiven Gassensor anzugeben, das bei optimierten Diffusionseigenschaften (Porosität) eine gute Haftung zu der darunterliegenden Schicht oder Grenzfläche durch Minimierung der Unterschiede im Wärmedehnungsvernaten der Materialien aufweist und das eine gute mechanische Festigkeit hinsichtlich möglicher Einwirkung von abrasiven Teilchen über lange Zeiträume hinweg zeigt.

Erfindungsgemäß wird die vorstehende Aufgabe dadurch gelöst, daß die erste Schicht neben der katalytisch wirksamen Substanz mit einem Volumenanteil von 20 bis 80 % außerdem ein Titanat enthält, das mindestens mit einem Titanat der resistiven Gassensorschicht identisch ist, und wobei die zweite Schicht anstelle der katalytisch wirksamen Substanz der ersten Schicht ein Oxidgemisch aus den Oxiden von Al, Si und Ba aufweist.

Sensoren für die Kontrolle und Regelung von Abgasen aus Verbrennungsanlagen sind in der Regel großen Belastungen wie hohen Temperaturen, Temperaturwechseln, Heißgaskorrosion, Vibrationen, als Katalysatorgifte wirkenden chemischen Verbindungen etc. ausgesetzt. Zur Erhaltung der Funktionsfähigkeit eines solchen Sensors ist ein erfindungsgemäßes katalytisches Schichtsystem vorteilhaft. Die mindestens zweischichtige Struktur des katalytischen Schichtsystems auf der gassensitiven Schicht gewährleistet sowohl einen guten mechanischen Schutz bei der Montage des Sensorelementes in ein Gehäuse, als auch gegenüber möglichen abrasiven Partikeln im Abgasstrom. Die einzelnen Schichten haben üblicherweise eine Dicke im Bereich von 5 µm bis 40 µm, so daß insgesamt ein Schichtpaket mit einer Dicke von circa 10 bis 160 µm auf der gassenstiven Schicht entsteht. Das Schichtsystem, insbesondere die erste Schicht über der gassensitiven Schicht, enthält mindestens eine katalytisch wirksame Substanz, die einen Volumenanteil dieser Schicht im Bereich von 20 bis 80 Vol % einnimmt. Die katalytische Wirkung ist erforderlich, um den zu messenden Gasanteil aus dem Gasstrom in eine für die sensitive Schicht detektierbare Komponente zu überführen. Der ergänzende Volumenanteil der ersten Schicht wird von einem Titanat gebildet, das mindestens einem Titanat der darunterliegenden, resistiven Gassensorschicht entspricht. Dieses Merkmal bewirkt eine optimale Haftung zwischen gassensitiver Schicht und erster katalytischer Schicht, selbst dann, wenn die gassensitive Schicht bereits bei hoher Temperatur gesintert vorliegt.
Unter Titanat im Sinne der Erfindung wird ein Doppeloxid nach der allgemeinen Formel ABO₃ verstanden, wobei B ein vierwertiges Titan-Ion und A ein oder mehrere Elemente aus der Gruppe Mg, Ca, Sr und Ba ist und/oder Verbindungen mit den allgemeinen Formeln M₄TiO₄, M₂TiO₃, M₂Ti₂O₅, M₂Ti₃O₇ und M₂Ti₉O₂₀, die bei der Reaktion von Titandioxid mit Alkalihydroxiden oder Alkalikarbonaten entstehen. Erfindungsgemäß treten die beiden in ihrer chemischen Zusammensetzung im Wesentlichen gleichen Titanate bei der Temperaturbehandlung der aufgetragenen katalytischen Schicht in Wechselwirkung und gehen an vielen kleinen Stellen lokal einen festen Verbund ein. Da somit keine relevanten Unterschiede im Wärmeausdehnungsverhalten der Materialien vorliegen, werden beim Aufheizen und Abkühlen die inneren mechanischen Spannungen im Verbund minimiert. Zusätzlich zum Titanat kann in der ersten Schicht auch eine niedrig-sinternde Substanz in kleinen Mengen enthalten sein, die die Einbrenntemperatur für die erste Schicht im Sinne des Erhalts der Katalysatorwirkung vorteilhaft herabsetzt.
Die Schicht zeichnet sich durch eine Porosität von etwa 25 bis 45 Vol.-% aus, so daß bei gutem Verbund bzw. guter Haftung der zu detektierende Gasstrom mit ausreichender Geschwindigkeit eindiffundieren kann.

Um dem gesamten Schichtsystem mehr mechanische Stabilität zu verleihen damit die Funktionsfähigkeit auch über lange Zeiträume gewährleistet werden kann, wird über der ersten Schicht eine zweite Schicht angeordnet, die anstelle der katalytisch wirksamen Substanz der ersten Schicht ein Oxidgemisch aus SiO₂, Al₂O₃ und BaO enthält. Durch diesen Zusatz zu dem keramischen Material der ersten Schicht bzw. der gassensitiven Schicht wird die Porosität im oberen Teil des katalytischen Schichtsystems herabgesetzt. Dadurch wird abrasiven Teilchen, die auf die Oberfläche des Sensorelementes treffen, ein erhöhter Widerstand entgegengesetzt.

Durch die in den Unteransprüchen 2 bis 10 aufgeführten Maßnahmen sind vorteilhafte Weiterbildungen und Verbesserungen des im Hauptanspruch angegebenen katalytischen Schichtsystems möglich.

Besonders vorteilhaft ist es, wenn als katalytisch wirksame Substanz ein Platingruppenmetall verwendet wird. Unter Platingruppenmetall wird ein Element der Gruppe Pt, Pd, Rh, Ru, Os, Ir verstanden. Platin oder Rhodium oder ein Gemisch aus beiden Metallen wird vorzugsweise eingesetzt.

Hinsichtlich der katalytisch wirksamen Substanz als Bestandteil in dem Schichtsystem hat es sich bewährt, wenn die jeweilige Substanz, vorzugsweise ein Platingruppenmetall, in Pulver- oder Flockenform verwendet wird. Letzteres wird auch als "flake" bezeichnet. Aufbereitungen, bei denen das Platingruppenmetall an ein Resinat gebunden vorliegt (beispielsweise Rhodium-Sulforesinat der Firma W.C.Heraeus GmbH). können ebenfalls verwendet werden.

Hinsichtlich des in dem Schichtsystem verwendeten Titanats ist es vorteilhaft Strontiumtitanat einzusetzen. Ebenso können andere Titanate wie beispielsweise Calcium- oder Bariumtitanat oder Titanoxid verwendet werden.

Für das Oxidgemisch der zweiten Schicht hat es sich als zweckmäßig erwiesen, das es mit einem Volumenanteil 20 bis 80 % in der zweiten Schicht enthalten ist. Als besonders vorteilhaft werden Anteile von 40 bis 60 Vol.% bzw. 45 bis 55 Vol.% angesehen.

Die Herstellung des Schichtsystems in einfacher, rationeller Fertigungstechnik, die überdies eine verbesserte Dosierung und lokale Verteilung der katalytisch wirksamen Bestandteile ermöglicht, erfolgt beispielsweise dadurch, daß die erste und die zweite Schicht nacheinander durch Aufdrucken einer Paste auf die Gassensorschicht aufgetragen und anschließend gesintert werden, wobei die Paste für die erste Schicht neben einem Anpastmittel eine katalytisch wirksame Substanz und ein Titanat enthält, das mindestens mit einem Titanat der Gassensorschicht identisch ist, und die Paste für die zweite Schicht anstelle der katalytischen Substanz in der Paste für die erste Schicht ein Oxidgemisch aus den Oxiden von Al, Si und Ba aufweist.

Als Anpastmittel kommen in diesem Zusammenhang zum Beispiel in organischen Lösungsmitteln gelöste Cellulosen infrage. Durch den Einbrand bei ca. 850 bis 1400 ° C verflüchtigen sich die organischen Bestandteile der Paste rückstandsfrei und es tritt eine Verfestigung der Schicht durch Sintern ein. Die Haftung von der aufgetragenen Schicht zu der jeweiligen darunterliegenden Schicht erfolgt über das keramische Material, nämlich ein Titanat, das jeweils in der Gassensorschicht und im katalytischen Schichtsystem als Bestandteil enthalten ist.

Als Auftragstechnik zur Herstellung des katalytischen Schichtsystems hat sich das Siebdruckverfahren bewährt. Die Paste kann dabei mit hoher geometrischer Genauigkeit aufgetragen werden, so daß dadurch eine genaue Dosierung und Verteilung aller Schichtbestandteile gewährleistet ist.

Nachfolgend wird die Erfindung anhand von Beispielen für ein katalytisches Schichtsystem für einen resistiven Lambda-Sensor auf Strontiumtitanat-Basis näher erläutert.

### Beispiel 1:

Zur Herstellung einer siebdruckfähigen Paste für die erste Schicht des erfindungsgemäßen katalytischen Schichtsystems werden folgende Ausgangsmaterialien verwendet:
Pt-Flake der Firma Degussa, Produkt-Nr. 64320001,
SrTiO₃-Pulver,
Siebdruckmedium Nr. 80840 der Firma Cerdec, Frankfurt.

Die Pulver und das Siebdruckmedium werden in Anteilen von 30 g Platin, 10 g SrTiO₃-Pulver und 16 g Siebdruckmedium (hier auch als Anpastmittel) in einem 80 ml Achatbecher gegeben und nach Zugabe von 7 Achatkugeln 8 Stunden lang in einer Planetenkugelmühle homogenisiert.

Für die Herstellung der Paste für die zweite Schicht werden 4,9 g Al₂O₃, 3,4 g SiO₂, 3,3 g BaO, 11,6 g SrTiO₃ und 12,5 g Siebdruckmedium Nr. 80840 der Firma Cerdec in einem 80 ml Achatbecher gegeben und ebenfalls nach Zugabe von 7 Achatkugeln 8 Stunden lang in einer Planetenkugelmühle homogenisiert.

Die Paste 1 und 2 werden nacheinander durch Siebdruck auf eine Sensorschicht aus SrTiO₃ eines Lambda-Sensors aufgebracht, wobei jeweils nach dem Siebdrucken 10 Minuten bei 120°C getrocknet wird. Danach wird mit folgendem Sinterprofil eingebrannt:
1. Aufheizen auf 350°C mit einer Aufheizrate von 10 K/Minute;
2. 30 Minuten Haltezeit bei 350°C;
3. Aufheizen auf 1330°C mit einer Aufheizrate von 10 K/Minute;
4. 60 Minuten Haltezeit bei 1330°C;
5. Abkühlen auf Raumtemperatur mit einer Abkühlrate von 10 K/Minute.

### Beispiel 2:

Zur Herstellung der Paste für die erste Schicht des erfindungsgemäßen katalytischen Schichtsystems werden nun 11,6 g SrTiO₃, 4,9 g Al₂O₃, 3,4 g SiO₂, 3,3 g BaO und eine Lösung von 0,5 g Rhodiumsulforesinat in 5 ml Terpineol mit 20 g n-Hexan in einen 80 ml Achatbecher gegeben und nach Zugabe von 7 Achatkugeln 0,5 Stunden lang homogenisiert. Danach wird das n-Hexan abgedampft. Anschließend wird als Anpastmittel 10 g Siebdruckmedium Nr. 80840 der Firma Cerdec zugegeben und erneut 4 Stunden lang in einer Planetenkugelmühle homogenisiert.

Die Herstellung der Paste für die zweite Schicht erfolgt analog dem Beispiel 1.
Das Siebdrucken auf eine Sensorschicht aus SrTiO₃ eines Lambda-Sensors und die Sinterung der Paste 1 und 2 aus Beispiel 2 erfolgen ebenfalls im Wesentlichen analog dem Beispiel 1. Es wird jedoch nur auf 1250°C aufgeheizt und die Haltezeit bei 1250°C beträgt hier anstatt 60 Minuten nur 30 Minuten.

Durch in Beispiel 1 und 2 beschriebenen Materialien und Vorgehensweisen wird auf einer resistiven Gassensorschicht ein katalytisches Schichtsystem erzeugt, bei dem nach Beispiel 1 als katalytisch wirksame Substanz Platin mit einem Volumenanteil von circa 50 % in der ersten Schicht vorliegt.
Im Beispiel 2 wird jedoch Rhodium als katalytisch wirksame Substanz eingesetzt. Außerdem enthält hier die erste Schicht neben dem keramischen Material der sensitiven Schicht, nämlich SrTiO₃, auch das Oxidgemisch aus Al₂O₃, SiO₂ und BaO der zweiten Schicht.

## Patentansprüche

1. Katalytisches Schichtsystem auf einem resistiven Gassensor, insbesondere auf einer resistiven, auf einem Titanat basierenden Gassensorschicht, mit mindestens einer ersten Schicht und einer über der ersten liegenden zweiten Schicht, wobei mindestens eine Schicht eine katalytisch wirksame Substanz aufweist, dadurch gekennzeichnet, daß die erste Schicht neben der katalytisch wirksamen Substanz mit einem Volumenanteil von 20 bis 80 % außerdem ein Titanat enthält, das mindestens mit einem Titanat der resistiven Gassensorschicht identisch ist, und wobei die zweite Schicht anstelle der katalytisch wirksamen Substanz der ersten Schicht ein Oxidgemisch aus den Oxiden von Al, Si und Ba aufweist.

2. Katalytisches Schichtsystem nach Anspruch 1, dadurch gekennzeichnet, daß die erste Schicht 40 - 60 Vol.% katalytisch wirksame Substanz enthält.

3. Katalytisches Schichtsystem nach Anspruch 1 oder 2, dadurch gekennzeichnet, daß die erste Schicht 45 - 55 Vol.% katalytisch wirksame Substanz enthält.

4. Katalytisches Schichtsystem nach einem der Ansprüche 1 bis 3, dadurch gekennzeichnet, daß die katalytisch wirksame Substanz ein Platinguppenmetall aufweist.

5. Katalytisches Schichtsystem nach Anspruch 4, dadurch gekennzeichnet,daß als Platingruppenmetall Platin oder/und Rhodium verwendet wird.

6. Katalytisches Schichtsystem nach Anspruch 4 oder 5, dadurch gekennzeichnet, daß das Platingruppenmetall in Pulver- oder Flockenform in das Schichtsystem eingeführt ist.

7. Katalytisches Schichtsystem nach einem der Ansprüche 1 bis 6, dadurch gekennzeichnet, daß das Titanat der ersten und zweiten Schicht im Wesentlichen von Strontiumtitanat gebildet wird.

8. Katalytisches Schichtsystem nach einem der Ansprüche 1 bis 7, dadurch gekennzeichnet, daß das Oxidgemisch zu 20 - 80 Vol.% in der zweiten Schicht enthalten ist.

9. Katalytisches Schichtsystem nach Anspruch 8, dadurch gekennzeichnet, daß das Oxidgemisch zu 40 - 60 Vol.% in der zweiten Schicht enthalten ist.

10. Katalytisches Schichtsystem nach Anspruch 8 oder 9, dadurch gekennzeichnet, daß das Oxidgemisch zu 45 - 55 Vol.% in der zweiten Schicht enthalten ist.
